# EUROPEAN PATENT SPECIFICATION

(11) **EP 4 493 815 B1**
(45) Date of publication and mention of the grant of the patent: **04.11.2026**
(21) Application number: 23714084.3
(22) Date of filing: 14.03.2023
(51) Int. Cl.: F03D 1/04, F03D 9/25, F03D 15/20

(54) **TURBINE**
TURBINE
ÉOLIENNE

(30) Priority: 16.03.2022 GB 202203624
(43) Date of publication of application: 22.01.2025
(73) Proprietor: Windvane Technologies Limited, Nottinghamshire NG23 6JN (GB)
(72) Inventor: BAMFORD, Russell, Norwell Newark Nottinghamshire NG23 6JN (GB)
(74) Representative: Marks & Clerk LLP
(86) International application number: PCT/GB2023/050597
(87) International publication number: WO 2023/175316

(56) References cited:
- CN-A- 107 366 501
- CN-U- 202 560 478
- CN-U- 209 687 329
- US-A1- 2001 004 439
- US-A1- 2004 247 438
- US-A1- 2009 058 093
- US-A1- 2016 376 910

## Description

### Technical field

The invention relates to wind turbines for generating electrical power.

### Background

Wind turbines can be used convert kinetic energy in the wind into electrical power, using a generator. Typically, wind turbines comprise a rotor with a plurality of blades. The rotor is rotated when wind flows past the blades, which causes a generator to spin in order to generate electrical power.

There are many advantages associated with the use of wind turbines to generate electrical power. For example, wind power is a sustainable source of energy, which does not cause pollution, and increasingly people are turning to sustainable sources of power as an alternative to the use of fossil fuels.

Traditionally, large, commercial wind turbines have been used in order to generate electrical power. These commercial wind turbines require large amounts of open space, sometimes offshore, are expensive to manufacture and install, and are not appropriate for domestic use by individuals.

While there are domestic wind turbines available, which are lower cost and suitable for installation in a garden/on a house, these wind turbines are typically visually displeasing, noisy and/or inefficient. As such, individuals may be reluctant to install such units on/around their properties.

There exists a need to provide wind turbines suitable for domestic use and which address the above-mentioned problems.

US 2004/247438 discloses a wind energy conversion system includes upper and lower wind turbines having counter-rotating blade assemblies supported for rotation about a vertical rotation axis, with each blade assembly carrying a rotor for rotation past a stator to produce an electrical output.

### Summary

According to the invention, there is provided a wind turbine and a funnelling system as set out in the accompanying claims.

### Brief description of drawings

Figure 1 shows an exemplary wind turbine;
Figure 2 shows a section view of an exemplary wind turbine;
Figure 3 shows a section view of an exemplary wind turbine;
Figure 4 shows a section view of an exemplary wind turbine;
Figure 5 shows a section view of an exemplary wind turbine; and
Figure 6 shows a section view of an exemplary wind turbine;

### Detailed description

Generally disclosed herein are wind turbines that use a generator to generate electrical power. Exemplary wind turbines may comprise a rotor comprising a hub and at least one blade extending from the hub configured to facilitate rotation of the rotor when air/wind flows past the at least one blade. The exemplary wind turbine may further comprise a frame which at least partially receives the rotor, and a generator comprising at least one magnet and a conductor coil. One of the at least one magnet and the conductor coil may be coupled to the rotor, such that it rotates therewith. The other of the at least one magnet and the conductor coil may be fixed relative to the frame. As such, when the rotor rotates, the at least one magnet and the coil move relative to one another, and the generator generates electrical power.

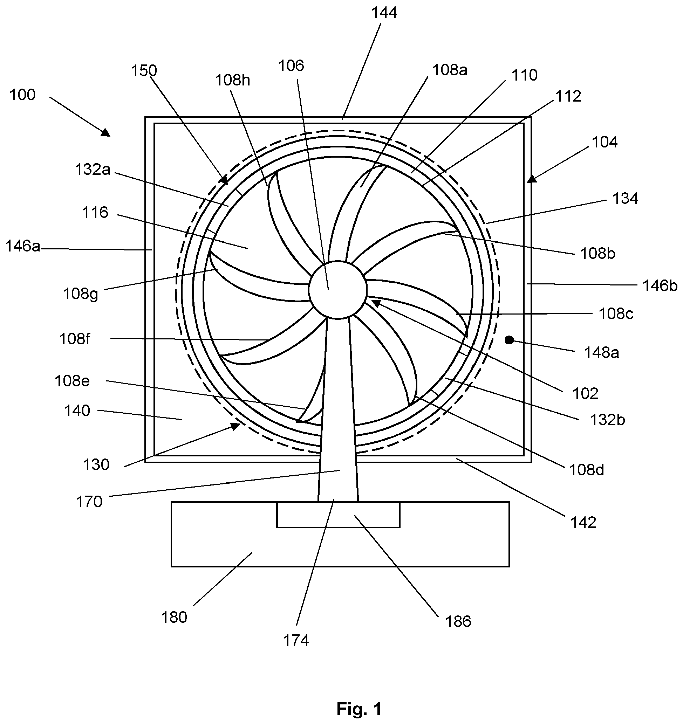

Figure 1 shows an exemplary wind turbine 100. The exemplary wind turbine 100 comprises a rotor 102 and a frame 104. The rotor 102 may be rotatable with respect to the frame 104.

The rotor 102 comprises a hub 106 and a plurality of blades 108a-h. In the exemplary wind turbine 100 depicted in Figure 1, the rotor 102 comprises eight blades 108a-h, however the skilled person will appreciate that in alternative arrangements, the rotor 102 may comprise substantially any number of blades. For example, the rotor 102 may comprise at least one blade, or a plurality of blades.

The blades 108a-h may extend outwardly from the hub 106, for example radially outwardly. In the exemplary arrangement shown in Figure 1, an inner end (which may be a radially inner end) of each of the blades 108a-h is coupled to the hub 102.

In the exemplary arrangement shown in Figure 1, the blades 108a-h are equally spaced about the hub 106. That is the angular separation between adjacent blades 108a-h is equal for each of the plurality of blades 108a-h. However, the skilled person will appreciate that in alternative arrangements, the separation between adjacent blades may vary. The skilled person will also appreciate that in further alternative arrangements, the blades 108a-h may at least partially overlap. Furthermore, the air gap between adjacent propeller blades 108a-h may be dimensioned to achieve a desired output. That is, the air gap between adjacent propeller blades 108a-h may be increased or reduced from the schematic depiction of Figure 1.

The exemplary rotor 102 shown in Figure 1 comprises a ring 110. An outer end (which may be a radially outer end) of each of the plurality of blades 108a-h may be coupled to the ring 110. Specifically, the outer end of each of the plurality of blades 108a-n may be coupled to an inner surface 112 of the ring 110. In exemplary arrangements, the outer end of each of the plurality of blades 108a-n may be directly coupled to the ring 110. In the arrangement shown in Figure 1, each of plurality of blades 108a-h extends between the hub 106 and the ring 110.

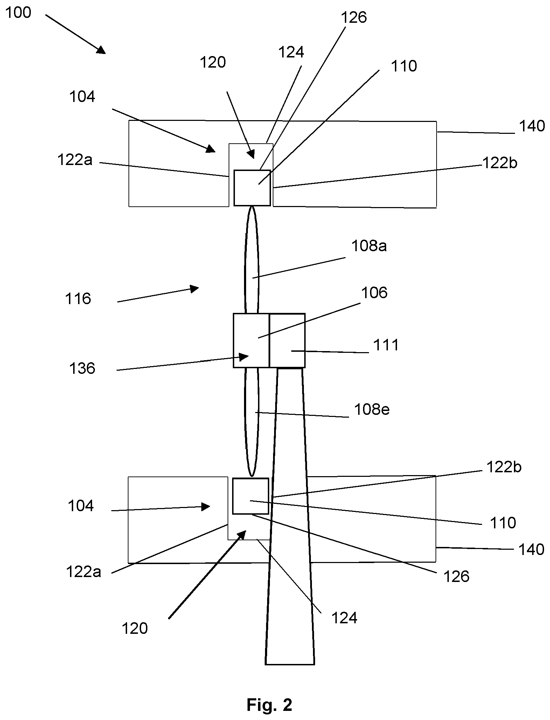

The rotor 102 may be configured to rotate with respect to the frame 104. The exemplary wind turbine 100 may comprise a hub support 111 (visible in Figure 2, which is a section view through the wind turbine 100 of Figure 1). The hub support 111 may be coupled to the rotor 102. The hub support 111 may be axially and rotationally fixed with respect to the frame 104. As such, the rotor 102 may be configured to rotate with respect to hub support 111 and therefore with respect to the frame 104. The skilled person will appreciate that there are many ways that the rotor 102 may be coupled to the hub support 111 such that the rotor 102 is rotatable with respect to the hub support 111, for example, by using shaft arrangements.

Since the ring 110 is coupled to the plurality of blades 108a-h, which in turn are coupled to the hub 102, rotation of one of the hub 102, the plurality of blades 108a-h and the ring 110 causes rotation of the others of the hub 102, the plurality of blades 108a-h and the ring 110. That is, one or more of the hub 102, the plurality of blades 108a-h and the ring 110 may be rotatably coupled.

The frame 104 may at least partially receive the rotor 102. That is, at least a portion of the frame 104 may surround and/or enclose at least a portion of the rotor 102. In the exemplary wind turbine 100 shown in Figure 1, the rotor 102 is telescopically received within the frame 104. The rotor 102 may be housed within the frame 104. In alternative arrangements, the frame 104 may comprise a locating feature configured to receive, house and guide the rotor 102.

The exemplary frame 104 comprises an aperture 116 within which the rotor 102 is received. In the exemplary arrangement shown in Figure 1, the aperture 116 comprises a circular aperture, however the skilled person will appreciate that in alternative arrangements substantially any shaped aperture may be used so long as the aperture is suitably dimensioned to receive the rotor 102.

As shown in Figure 2, which is a section view through the wind turbine 100 shown in Figure 1, in exemplary arrangements, the frame 104 may comprise a channel 120 (the channel 120 is not shown in Figure 1 for clarity). In exemplary arrangements, at least a portion of the rotor 102 may be received within the channel 120 and rotate therein. In exemplary arrangements, at least a portion of the ring 110 of the rotor 102 is received within the channel 120. In the arrangement depicted in Figure 2, substantially all of the ring 110 is received within the channel 120 and may be configured to rotate therein as the rotor 102 rotates. In alternative arrangements, at least a portion of the plurality of blades 108a-h may be received within the channel 120.

In the exemplary arrangement shown in Figure 2, the channel 120 comprises sidewalls 122a, 122b and a base 124. The ring 110 may be received within the channel 120 such that an outer surface 126 of the ring 110 is separated from the base 124 of the channel 120 by a gap. Sidewalls of the ring 110 may be separated from the sidewalls 122a, 122b of the channel 120 by a gap. This may allow the ring 110 to rotate within the channel 120 unimpeded (i.e. without experiencing frictional forces).

The channel 120 may extend along the aperture 116. In some arrangements, the channel 120 may be formed in a wall of the aperture 116. In alternative arrangements, the wall of the aperture 116 may form the base 124 of the channel 120. In such arrangements, the frame 104 may comprise walls/wall panels comprising an aperture of smaller dimension that the aperture 116. The wall panels may be coupled to opposed sides of the frame 104 such that they at least partially extend over opposed sides of the aperture 116 to form a channel 120. That is, the base 124 of the channel 120 may be formed by the wall of the aperture 116 and the sidewalls 122a, 122b of the channel 120 may be formed by the opposed wall panels. Advantageously, the channel 120 may protect the components located therein from the weather, and as such provide some weatherproofing.

The skilled person will appreciate that alternative wind turbines may not comprise a channel 120. For example, alternative wind turbines may comprise an aperture 116 without a channel 120, and the rotor 102 may be received within the aperture 116 such that an outer surface of the ring 110 faces a wall of the aperture 110 without being enclosed by a channel.

The exemplary frame 104 depicted in Figure 1 comprises a substantially square frame. However the skilled person will appreciate that alternative shaped frames (e.g. rectangular frames) may be used.

The exemplary wind turbine 100 may further comprise a generator 130. The generator 130 may be disposed at a circumference of the rotor 102, and therefore may comprise a circumferential generator as described below.

The generator 130 comprises at least one magnet 132 and a conductor coil 134.

The generator 130 depicted in Figure 1 comprises two magnets 132a, 132b, however the skilled person will appreciate that this is for illustrative purposes only. In alternative arrangements, the generator 130 may comprise substantially any number of magnets in dependence on the desired output from the generator 130.

In the exemplary wind turbine 100 shown in Figure 1, the magnets 132a, 132b are coupled to the rotor 102 such that they rotate therewith. Specifically, the ring 110 may comprise the magnets 132a, 132b such that the magnets 132a, 132b rotate therewith, as shown in the exemplary arrangement of Figure 1. The skilled person will appreciate however that in alternative arrangements, alternative components of the rotor 102 may comprise the magnets 132a, 132b. For example, in one alternative arrangement, one or more of the blades 108a-h may comprise the magnets 132a, 132b. In such arrangements, the magnets 132a, 132b may be located on the outer ends of the blades 108a-h. Such an arrangement may be suitable for rotors 102 that do not comprise a ring 110. In further arrangements, both the ring 110 and one or more of the blades 108a-h may comprises magnets.

The conductor coil 134 may be fixed relative to the frame 104. In exemplary arrangements, the conductor coil may be coupled to the frame 104 and positioned such that it intersects the magnetic field of the magnets 132a, 132b. The conductor coil 134 may be arranged to at least partially surround a periphery of the rotor 102. In exemplary arrangements, the conductor coil 134 may be arranged to at least partially surround the outer periphery of the ring 110. In arrangements in which the rotor 102 does not comprise a ring, the conductor coil 134 may be arranged to at least partially surround the outer periphery of the blades 108a-h. For example, in exemplary arrangements, the conductor coil 134 may be positioned to at least partially surround the wall of the aperture 116 and/or the channel 120 of the frame 104. The skilled person will appreciate however that in alternative arrangements, the conductor coil 134 need not surround a periphery of the rotor 102, and may be positioned on any point of the frame 104 relative to the rotor 102 such that it intersects the magnetic field of the magnets 132a, 132b.

In the arrangement shown in Figure 1, the conductor coil 134 may be arranged to continuously extend around a periphery of the rotor 102. For example, the conductor coil 134 may extend continuously about the channel 120 and/or wall of the aperture 116. In further arrangements, the generator 130 may comprise a plurality of discrete conductor coil segments that are arranged around the rotor 102 and optionally are separated.

The skilled person will appreciate that in alternative arrangements, the at least one magnet 132 may be fixed relative to the frame 104 and the conductor coil 134 may be coupled to the rotor 102 such that it rotates therewith. In such arrangements, the conductor coil 134 may be located on the ring 110 and/or the blades 108a-h and the magnets 132a,132b may be coupled to the frame 104 and located such that an intersection between the conductor coil 134 and the magnetic field of the magnets 132a, 132b is achieved.

The inventors have appreciated that by placing a generator at the circumference of the rotor 102 (e.g. at the ring 110 and/or a radially outer portion of one or more of the blades 108a-h), more efficient generation of electrical power may be achieved. This is because the outer parts of the rotor 102 are moving more quickly than the inner parts of the rotor 102 as the rotor 102 rotates.

The exemplary wind turbine 100 may comprise a rotor hub generator 136. In exemplary arrangements, the wind turbine 100 may comprise the rotor hub generator 136 and the generator 130. In alternative arrangements, the wind turbine 100 may comprise one of the rotor hub generator 136 and the generator 130.

The rotor hub generator 136 may comprise at least one magnet and a conductor coil. One of the at least one magnet and the conductor coil of the rotor hub generator may be coupled to the rotor 102 such that the one of the at least one magnet and the conductor coil rotate therewith. In exemplary arrangements, the hub 106 and/or at least one of the blades 108a-h may comprise the one of the at least one magnet and the conductor coil. For example, the one of the at least one magnet and the conductor coil may be located on the hub 106 and/or on a radially inner portion of one or more of the blades 108a-h such that the one of the at least one magnet and the conductor coil rotate therewith.

The other of the at least one magnet and the conductor coil (i.e. the one not coupled to the rotor 102), may be fixed relative to the frame 104. In the exemplary wind turbine 100, the other of the at least one magnet and the conductor coil may be coupled to, or located on, the hub support 111, which as described above may be fixed relative to the frame 104. In alternative arrangements, the other of the at least one magnet and the conductor coil may be fixed to the frame 104 itself. The skilled person will appreciate that the other of the at least one magnet and the conductor coil may be fixed in any position such that the conductor coil is located within the magnetic field of the at least one magnet, and such that rotation of the rotor 102 causes relative movement between the at least one magnet and the conductor coil.

The wind turbine 100 may comprise a braking system. The braking system may comprise a brake configured to apply a braking force to the rotor 102 to resist rotation of the rotor 102 in dependence on a rate of rotation of the rotor 102. For example, the braking system may be configured to apply a braking force to the rotor 102 if the rotational speed of the rotor 102 exceeds a threshold. This may ensure that the rotor 102 does not rotate at speeds that may lead to damage of the wind turbine 100.

In exemplary arrangements, the brake may comprise an electronic brake, such as a rheostat. In such arrangements, the brake may be housed within the hub support 111.

The skilled person will appreciate that in alternative arrangements, a mechanical brake may be used.

In exemplary arrangements, the braking system may comprise the rotor hub generator 136. That is, in exemplary arrangements the electrical power generated by the rotor hub generator 136 may at least partially power the braking system. For example, where the brake comprises an electronic brake such as a rheostat, the electrical power generated by the rotor hub generator 136 may power the electrical brake to adjust the electrical current/resistance through the conductor coil of the rotor hub generator 136 to alter the rotational speed of the rotor 102.

The braking system may comprise a power monitor. The power monitor may be configured to monitor the electrical power generated by the generator 130 (i.e. the circumferential generator). The skilled person will appreciate that the electrical power generated by the generator 130 will be in dependence on the rotational speed of the rotor 102. As such, the power generated by the generator 130 may be used as a proxy for the rotational speed of the rotor 102. In exemplary arrangements, if the power monitor detects that the electrical power generated by the generator 130 exceeds a threshold, the power monitor may control the brake to apply a braking force to the rotor 102. If the power monitor detects that the electrical power generated by the generator 130 is below the threshold, no braking force is applied by the brake. The threshold may be indicative of an upper limit of a safe rotational speed of the rotor 102.

The exemplary wind turbine 100 may comprise a housing 140. The housing 140 may receive the rotor 102 such that rotor 102 rotates therein. At least a portion of the rotor 102 may be enclosed by the housing 140. The housing 140 may receive at least a portion of the frame 104, and may enclose the portion of the frame 104 therein. In alternative arrangements, the housing 140 may comprise the frame 104. For example, the frame 104 may be integrally formed with the housing 140, or one or more walls of the frame 104 may form one or more walls of the housing 140.

The housing 140 may comprise a base 142, a top 144 and walls 146a, 146b and 148a, 148b (only wall 148a is visible in Figure 1).

The housing 140 may contain at least one aperture 150 such that wind can travel into the housing 140 and engage the rotor 102. The exemplary housing 140 contains opposed apertures 150a, 150b (only aperture 150a is visible in Figure 1). In such arrangements, wind may travel into the housing 140 and engage the rotor 102 from opposed sides of the housing 140. In the exemplary arrangement shown in Figure 1, the opposed walls 148a, 148b comprise the apertures 150a, 150b respectively. That is, the walls 148a, 148b that are parallel to a plane that the blades 108a-h lie in comprise the apertures 150a, 150b.

At least one of the apertures 150a, 150b (and optionally both of the apertures 150a, 150b) may be sized such that at least a portion of the blades 108a-h are exposed by the aperture(s) 150a, 150b. That is, at least a portion of the blades 108a-h may overlap with the cross-sectional area of the aperture(s) 150a, 150b. In exemplary arrangements least one of the apertures 150a, 150b (and optionally both of the apertures 150a, 150b) may be sized such that the hub 106 and at least a portion of the blades 108a-h are exposed. The ring 110 may be located within the housing 140 such that it is at least partially enclosed by the walls 148a, 148b and does not overlap with the aperture(s) 150a, 150b. That is, the ring 110, and optionally the channel 120, may be located outside of the cross-sectional area of the aperture(s) 150a, 150b.

In exemplary arrangements the generator 130 may be enclosed by the housing 140. For example, the generator 130 may be received within the housing 140 and not directly exposed by the aperture(s) 150a, 150b (that is, the generator 130 may not be located within the cross-sectional area of the aperture(s) 150a, 150b). In the exemplary wind turbine 100, the magnets 132a, 132b and the conductor coil 134 may be received within the housing 140. In exemplary arrangements, the aperture(s) 150a, 150b may be sized such that the ring 110 and/or the portion of the blades 108a-h comprising one of the magnets 132a, 1332b and the coil 134 are not exposed through the aperture 116. For example, the ring 110 and/or the portion of the blades 108a-h comprising one of the magnets 132a, 1332b and the coil 134 may be received within the housing 140 such that they are located outside of the cross-sectional area of the aperture(s) 150a, 150b.

The inventors have realised that by having the generator 130 received within the housing 140, the noise experienced by a user of the wind turbine 100 by the generator 130 spinning is reduced.

The wind turbine 100 may comprise a mesh (not visible in Figure 1). The mesh may extend over at least one of, or alternatively both of, the aperture(s) 150a, 150b. The mesh may prevent ingress of debris/solids into the wind turbine 100 through the aperture(s) 150a, 150b. The mesh may also provide a safety barrier that prevents animals from entering the wind turbine 100 and individuals from inserting fingers, hands and/or limbs into the wind turbine 100, and specifically into the path of the blades 108a-h of the rotor 102.

The wind turbine 100 may comprise louvres. The louvres may extend over the aperture(s) 150a, 150b. In arrangements comprising the mesh, the louvres may extend over the mesh. In such arrangements, the mesh may be located between the louvres and the rotor 102. The louvres may be configured to expose at least part of the rotor 102 in an open position to allow wind to engage the blades 108a-h. For example, in exemplary arrangements, when the louvres are in the open position, at least part of the rotor 102 may be exposed through the aperture(s) 150a, 150b. The louvres may be configured to shield the rotor 102 in a closed position such that wind is unable to engage the blades 108a-h. For example, in exemplary arrangements, when the louvres are in the closed position, the louvres may substantially cover the aperture(s) 150a, 150b such that wind is unable to travel through the aperture(s) 150a, 150b to engage the blades 108a-h of the rotor 102. The louvres may be moveable between the open position and the closed position.

The louvres may comprise a plurality of slats. In exemplary arrangements, the plurality of slats may extend horizontally across the aperture(s) 150a, 150b, however the skilled person will appreciate that in alternative arrangements, the slats may be arranged to extend vertically across the aperture(s) 150a, 150b. In exemplary arrangements, the plurality of slats may be movable between the open position and the closed position. The plurality of slats may be configured such that movement of an individual one of the plurality of slats from the open to closed position (or vice versa) causes corresponding movement of the remaining slats of the plurality of slats. As such, the plurality of slats may be arranged to move between the open and closed positions together. In exemplary arrangements, the louvres may be driven by a motor to move between the open and closed positions. The wind turbine 100 may comprise an anemometer configured to determine wind speed, and a controller configured to control the motor to drive the louvres into the closed position if the wind speed exceeds a threshold. In alternative arrangements, the louvres may be manually moveable.

In exemplary arrangements, the wind turbine 100 may comprise a solar power source. The solar power source may comprise at least one solar cell (or a plurality of solar cells forming a solar panel). The solar cell may be configured to generate electrical power when light falls thereon. In exemplary arrangements, the solar power source may be coupled to the housing 140. The solar power source may be coupled to the housing 140 in a position that exposes the solar power source to sunlight, for example on an outer surface of the housing 140. In the exemplary wind turbine 100, the louvres may comprise the at least one solar cell. The solar power source may extend across at least one of the plurality of slats of the louvres. For example, a solar cell may extend across at least one of the plurality of slats of the louvres, or alternatively, a plurality of solar cells forming a solar panel may extend across at least one of the plurality of slats of the louvres. In exemplary arrangements, the solar power source may extend across substantially the whole of an outer surface of the at least one of the plurality of slats. In exemplary arrangements, the solar power source may extend across each of the slats of the plurality of slats (and may extend across substantially the whole of an outer surface of each of the plurality of slats).

The exemplary wind turbine 100 may comprise a tower 170. The tower 170 may be configured to support the rotor 102. In exemplary arrangements, the tower 170 may be coupled to the hub support 111, such that the tower 170 supports the rotor 102 via the hub support 111. In exemplary arrangements the tower 170 may be substantially hollow.

In the exemplary wind turbine 100 shown in Figures 1 and 2, the tower 170 is disposed vertically. In other words, a longitudinal axis of the tower 170 is perpendicular to a longitudinal axis of the hub 106 of the rotor 102 (and in some arrangements to a longitudinal axis of the hub support 111).

The tower 170 may be at least partially received within the housing 140. In the exemplary arrangement shown in Figures 1 and 2, an upper portion of the tower 170 is received within the housing 140. At least a portion of the tower 170 may be located outside of the housing 140. In the exemplary wind turbine 100, a lower portion of the tower 170 extends through an aperture in the base 142 of the housing 140. In alternative arrangements however, substantially all of the tower 170 may be received within the housing 140.

The wind turbine 100 may comprise a base housing 180. The base housing 180 may comprise a distributor configured to control the distribution of electrical power generator by the generator 130 and/or the rotor hub generator 136. The generator 130 and/or the rotor hub generator 136 therefore may be electrically connected to the base housing 180. In exemplary arrangements the generator 130 and/or the rotor hub generator 136 may be electrically connected to the base housing 180 via the tower 170. For example, electrical connectors, such as leads or wires, may extend through the hollow interior of the tower 170 into the base housing 180.

In exemplary arrangements, the base housing 180 may be configured to be installed in the ground. As such, the base housing 180 may be waterproofed. In exemplary arrangements, the base housing 180 may be waterproofed using one or more of: sealed bearings, gaskets, waterproof coatings etc. The skilled person will be able to envisage further methods of waterproofing the base housing 180.

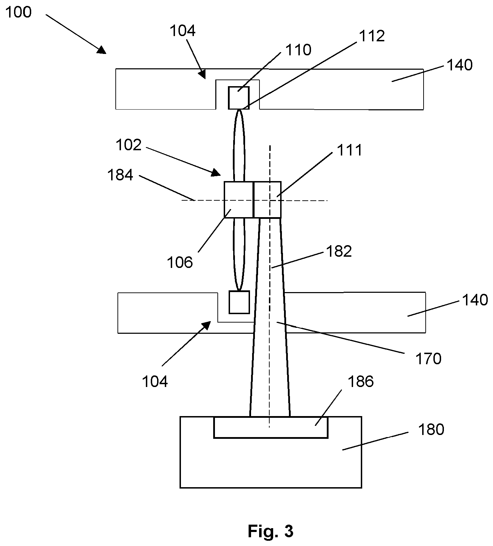

In the exemplary wind turbine 100, the housing 140 may rotatable with respect to the base housing 180 to allow the orientation of the rotor 102 (i.e. the direction that the rotor 102 faces) to be adjusted. In such arrangements, the housing 140 may be rotatable about an axis 182 which is perpendicular to the axis of rotation 184 of the rotor 102. This is shown in Figure 3. Adjustment of the direction that the rotor 102 faces allows the orientation of the rotor 102 to be optimised in dependence on the wind direction. For example, the direction that the rotor 102 faces may be adjusted to orientate it towards the wind to allow greater and/or more efficient generation of electrical power.

The housing 140 may be rotatably coupled to the tower 170, such that rotation of one of the housing 140 and the tower 170 causes corresponding rotation of the other of the housing 140 and the tower 170. The tower 170 may be rotatable with respect to the base housing 180 via a rotatable platform 186 to cause rotation of the housing 140 with respect to the base housing 180. In the exemplary wind turbine 100 shown in Figures 1-3, a base 174 of the tower 170 is coupled to the rotatable platform 186 such that rotation of the rotatable platform 186 with respect to the base housing 180 causes rotation of the tower 170 (and therefore rotation of the housing 140). In exemplary arrangements, the rotatable platform 182 may be at least partially received in the base housing 180.

In some arrangements, rotation of the housing 140 with respect to the base housing 180 to adjust the orientation of the rotor 102 may be manually actuated by a user. For example, the user may apply force to one or more of the housing 140 and the tower 170 to rotate the housing 140 and therefore the rotor 102 with respect to the base housing 180. In alternative arrangements, the wind turbine may comprise a motor configured to drive the rotatable platform 186 to rotate the rotor to adjust the direction that the rotor 102 faces.

In exemplary arrangements, the wind turbine 100 may comprise an orientation controller configured to control the motor to rotate the rotor 102 with respect to the base housing 180. In further exemplary arrangements, the wind turbine 100 may comprise an anemometer configured to determine the wind direction. Based on the determined wind direction, the anemometer may cause the orientation controller to control the motor to rotate the rotor 102 such that the rotor 102 is orientated towards the wind.

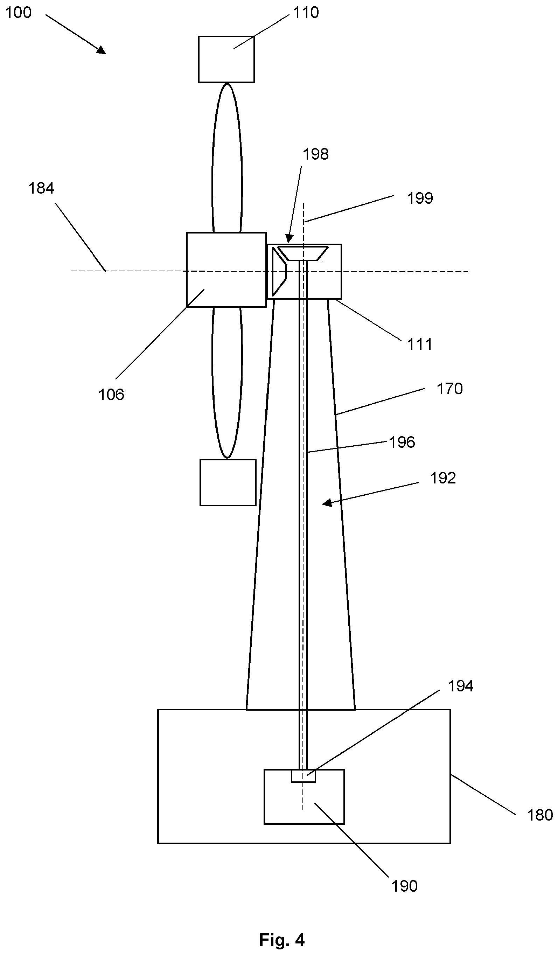

In exemplary wind turbines 100, the base housing 180 may comprise one or more generators 190. As shown in Figure 4, which shows the rotor 102, the tower 170 and the base box 180 in isolation from the housing 140 and frame 104 for clarity, the exemplary wind turbine 100 may comprise a rotation translation mechanism 192 configured to translate rotation of the rotor 102 into rotation of a rotatable element 194 received within the base housing 180. Rotation of the rotatable element 194 may spin the generator 190 within the base housing 180 to cause the generator 190 to generate electrical power.

In the exemplary wind turbine 100, the rotation translation mechanism 192 comprises a rotatable shaft 196. The rotatable shaft 196 may be received within the interior of the tower 170 and extend therethrough. A gear arrangement 198, which may for example comprise bevel or mitre gears, may translate rotation of the rotor 102 about its axis of rotation 184 into rotation of the rotatable shaft about an axis 199 which is perpendicular to the axis of rotation 184 of the rotor 102. Rotation of the rotatable shaft 196 may spin the generator 190 within the base housing 180. In exemplary arrangements, the rotatable shaft 196 may comprise the rotatable element 194 that is rotated to spin the generator 190. The rotatable element 194 may be rotatably coupled to the rotational shaft 196, such that rotation of the rotational shaft 196 causes corresponding rotation of the rotational element 194. In the exemplary arrangement shown in Figure 4, the rotatable element 194 is coupled to the rotatable shaft 196, such that rotation of the rotatable shaft 196 about the axis 199 causes rotation of the rotatable element 194 about the same axis 199. In exemplary arrangements, the rotatable element 194 may be concentrically arranged with the rotational shaft 196. In one example, the rotatable element 194 may comprise a flywheel. Rotation of the flywheel may spin the generator 190.

In alternative arrangements, the rotation translation mechanism 192 may comprise a further gear arrangement , which may for example comprise bevel or mitre gears, configured to translate rotation of the rotatable shaft 196 about the axis 199 into rotation of a rotatable element about an axis perpendicular to the axis 199.

The generator 190 may comprise at least one magnet and a conductor coil. One of the at least one magnet and conductor coil may be coupled to the rotatable element 194 such that it rotates therewith. The other of the at least one magnet and conductor coil may be fixed relative to the base housing 180 such that rotation of the rotatable element 194 causes relative movement between the at least one magnet and conductor coil. In some arrangements, the other of the at least one magnet and conductor coil may be coupled to a generator housing that received the rotatable element 194. The at least one magnet and the conductor coil may be positioned such that the conductor coil is located within the magnetic field of the at least one magnet.

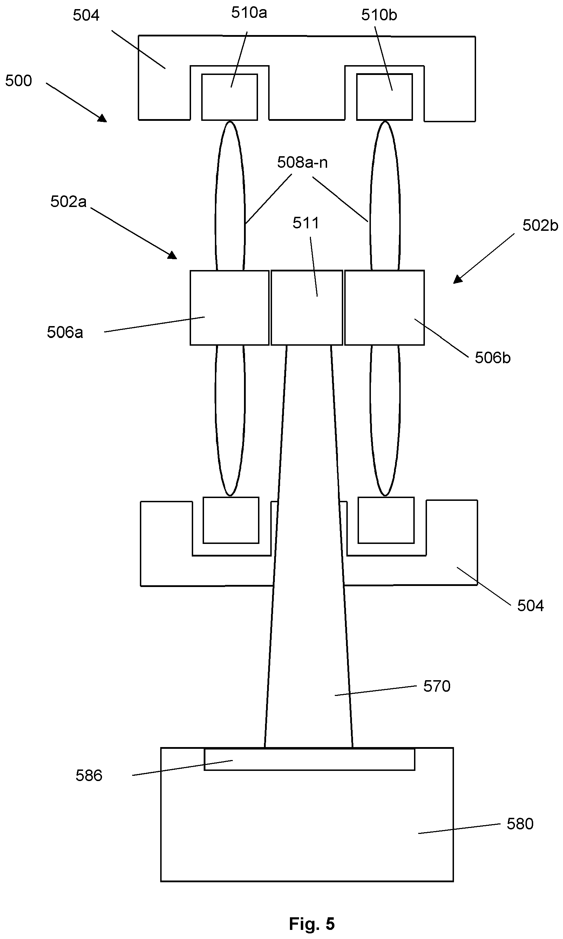

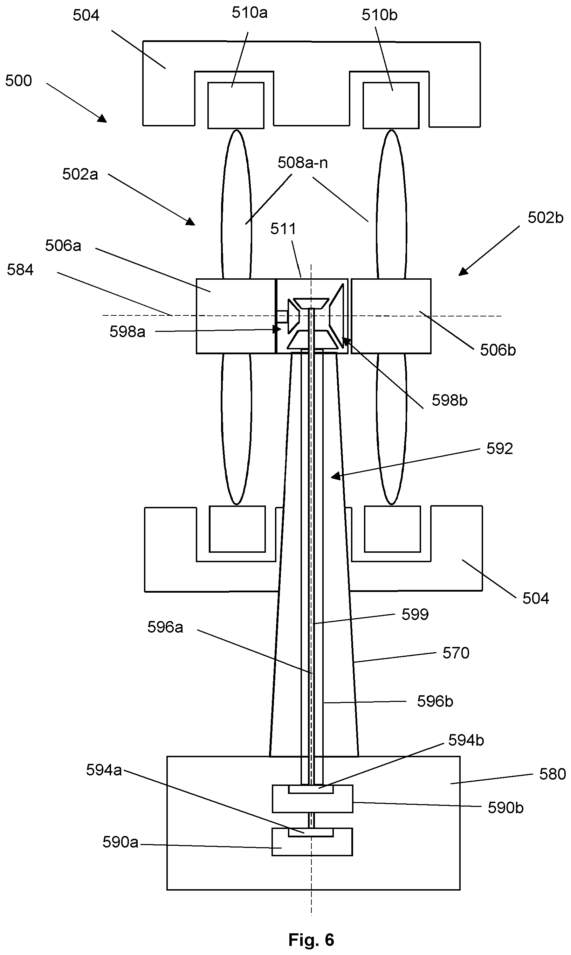

Figures 5 and 6 show an exemplary wind turbine 500. Many of the features of the wind turbine 500 are similar to those described above in respect of the wind turbine 100 of Figures 1-4. As such, a description of these features is not given again here and corresponding reference numerals are used to identify them in Figures 5 and 6. Thus, 502a, 502b are rotors, 506a, 506b are hubs, 508a-n are blades, 504 is the frame, 511 is the hub support, 520a, 520b are respective channels, 570 is the tower, 580 is the base housing and 586 is the rotatable platform. The wind turbine 500 may further comprise a housing comprising any of the features mentioned above in respect of the housing 140 of the wind turbine 100. The housing of the wind turbine 500 has been omitted from Figures 5 and 6 for clarity.

The wind turbine 500 is similar to the wind turbine 100, except that it comprises two rotors 502a, 502b instead of a single rotor. Each of the rotors 502a, 502b may comprise any of the features described above in respect of the rotor 102. That is, each of the rotors 502a, 502b may comprise a hub 506a, 506b and a plurality of blades 508a-n. The plurality of blades 508a-n of each rotor 502a, 502b may extend between the respective hubs 506a, 506b and respective rings 510a, 510b. Each of the rotors 502a, 502b may be rotatable with respect to the hub support 511.

The rotors 502a, 502b may be contra-rotating rotors. That is, the rotor 502a may be configured to rotate in a first direction and the rotor 502b may be configured to rotate in a second direction, opposite to the first direction when the blades 508a-n of the respective rotors are engaged by the wind.

The wind turbine 500 may comprise a pair of generators 530a, 530b. Each of the generators 530 may comprise the generator 130 described above. That is, each of the generators 530a, 530b may comprise at least one magnet and a conductor coil. One of the at least one magnet and the conductor coil of the first generator 530a, may be coupled to the ring 510a and/or an outer end of the blades 508a-n of the first rotor 502a, and the other of the at least one magnet and the conductor coil may be fixed relative to the frame 504, similarly to as described above in respect of the generator 130.

Similarly, one of the at least one magnet and the conductor coil of the second generator 530b, may be coupled to the ring 510b and/or an outer end of the blades 508a-n of the second rotor 502b, and the other of the at least one magnet and the conductor coil may be fixed relative to the frame 504, similarly to as described above in respect of the generator 130. The skilled person will appreciate that the use of two rotors 502a, 502b may increase the generated electrical power. Furthermore, the use of two rotors may increase stability of the wind turbine 100 and reduce vibration.

The wind turbine 500 may comprise a pair of rotor hub generators 536a, 536b. Each of the rotor hub generators 536a, 536b may comprise the rotor hub generator 136 described above. That is, each of the rotor hub generators 536a, 536b may comprise at least one magnet and a conductor coil. One of the at least one magnet and the conductor coil of the first rotor hub generator 536a may be coupled to the first rotor 502a such that the one of the at least one magnet and the conductor coil rotate therewith and the other of the at least one magnet and the conductor coil of the first rotor hub generator 536a may be fixed relative to the frame 504 (e.g. located on the hub support 511). Similarly, one of the at least one magnet and the conductor coil of the second rotor hub generator 536b may be coupled to the second rotor 502b such that the one of the at least one magnet and the conductor coil rotate therewith, and the other of the at least one magnet and the conductor coil of the second rotor hub generator 536b may be fixed relative to the frame 504 (e.g. located on the hub support 511).

The wind turbine 500 may further comprise braking systems, operable to apply a braking force to each of the rotors 502a, 502b in dependence on the rate of rotation of the respective rotors 502a, 502b, as described above in respect of the braking system of the wind turbine 100. Each of the braking systems may be powered by electricity generated by the respective first and second rotor hub generators 536a, 536b, as described above in respect of the braking system of the wind turbine 100.

The wind turbine 500 may comprise a base housing 580 comprising a pair of generators 590a, 590b, as shown in Figure 6. The wind turbine 500 may comprise a rotation translation mechanism 592 configured to translate rotation of the first rotor 502a into rotation of a rotatable element 594a received within the base housing 180, and rotation of the second rotor 502b into rotation of a rotatable element 594b received within the base housing 580. Rotation of the rotatable elements 594a, 594b may spin the generators 590a, 590b respectively to cause each of the generator to generate electrical power.

The rotation translation mechanism 592 may comprise shafts 596a, 596b. The shafts 596a, 596b may be sleeved shafts. That is, the shaft 596a may be received within the shaft 596b and rotate therein. Each of the shafts 596a, 596b may extend through the tower 570. Respective gear arrangements 598a, 598b, which may for example comprise bevel or mitre gears, may translate rotation of the first and second rotors 502a, 502b respectively about the axis of rotation 584 into rotation of the shafts 596a, 596b about an axis 599 which is perpendicular to the axis of rotation of the first and second rotors 502a, 502b. The respective gear arrangements 598a, 598b may comprise gears of different sizes, as shown in Figure 6. This allows the respective gears to rotate about common axes. The shaft 596a may rotate within the shaft 596b. In arrangements in which the rotors 502a, 502b are contra-rotating, the shafts 596a, 596b may rotate in opposed directions. In the exemplary arrangement shown in Figure 6, the rotatable element 594a is coupled to the rotatable shaft 596a, such that rotation of the rotatable shaft 596a about the axis 599 causes rotation of the rotatable element 594 about the same axis 599. The rotatable element 594b is coupled to the rotatable shaft 596b, such that rotation of the rotatable shaft 596b about the axis 599 causes rotation of the rotatable element 594b about the same axis 599. That is, both rotatable elements 594a, 594b rotate about the same rotational axis 599, which is also the same rotational axis 599 about which the rotatable shafts 596a, 596b rotate. The rotatable elements 594a, 594b may be concentrically arranged with respect to the respective rotational shafts 596a, 596b. The generators 590a, 590b may be vertically stacked in the base housing 580. Advantageously, aligning the generators 590a, 590b vertically and centrally, centralises the weight of the generators 590a, 590b and provides support for the wind turbine 100.

Operation of the wind turbine 100 will be described below with reference to Figures 1-4. The skilled person will appreciate that operation of the wind turbine 500 will be similar, except that both rotors 502a, 502b will spin to power the respective generators 530a, 530b, 536a, 536b and 590a, 590b.

A user may install the wind turbine 100. Installation of the wind turbine 100 may comprise installing the base housing 180 below the ground. As mentioned above, installation of the base housing 180 below the ground provides reduces the noise experienced by the user above-ground, as a result of the generator 190 within the base housing 180 spinning. As such, a quieter wind turbine 100 is provided.

The user may install the wind turbine 100 in a convenient location. For example, the housing 140 of the wind turbine 100 may be dimensioned to allow the wind turbine 100 to replace a fence panel. This allows the wind turbine 100 to be installed without taking up free space, for example, in the garden of a user. In exemplary arrangements, a plurality of wind turbines 100 may be installed. A plurality of wind turbines 100 may be installed in series to form a boundary, for example, in place of a fence. In such arrangements, the housing 140 of the wind turbine 100 may comprise coupling features configured to engage with coupling features of an adjacent wind turbine 100 to couple the wind turbines 100 together in series and/or stacked vertically.

In some examples, the wind turbine 100 may be coupled to a collection tray comprising at least one outlet configured to direct air collected by the collection tray. For example, the wind turbine 100 may be coupled to the collection tray such that an aperture 150a, 150b in the housing 140 may direct air into the collection tray and through the outlet of the collection tray. Such an arrangement may be suitable for installation in a wall of a property and may be used as part of a heating, ventilation and air conditioning, HVAC, system.

In use, wind may engages the blades 108a-h of the rotor 102 and cause the rotor 102 to rotate. In exemplary arrangements, the wind may travel though opposed apertures 150a, 150b of the housing 140 to engage the blades 108a-h of the rotor 102 and cause the rotor 102 to rotate.

Rotation of the rotor 102 causes the generator 130, the rotor hub generator 136 and the generator 190 in the base housing 180 to spin to generate electrical power. Advantageously, the wind turbine 100 exploits the rotation of the rotor 102 to spin three different generator systems as described below. This provides a wind turbine of increased efficiency.

The generator 130 generates electrical power due to the relative movement between the magnets 132a, 132b and the conductor coil 134 caused by the rotor 102 rotating relative to the frame 104. The electrical power generated by the generator 130 may be transferred to the distributor of the base housing 180 for distribution (e.g. through the leads/cables that extend through the tower).

The generator 190 generates electrical power due to the rotation of the rotor 102 causing rotation of the rotatable element 194 to spin the generator 190. The rotatable element 194 is rotated when the rotor 102 rotates due to the rotation translation mechanism 192. That is, rotation of the rotor 102 is translated into rotation of the shaft 196 by the gear arrangement 198. Rotation of the shaft 196 causes rotation of the rotatable element 194 about the axis 199, and this spins the generator 190. The electrical power generated by the generator 190 may be distributed by the distributor of the base housing 180.

The rotor hub generator 136 generates electrical power due to the relative movement between the magnets coupled to one of the hub 106 and the rotor hub support 111, and the conductor coil 134, coupled to the other of the hub 106 and the rotor hub support 111. This relative movement is caused by the rotor 102 rotating relative to the rotor hub support 111.

The power monitor may monitor the power generated by the generator 130. If the power generated by the generator 130 does not exceed the threshold, then the power generated by the rotor hub generator 136 is transferred to the distributor of the base housing 180 for distribution (e.g. via the cables and leads that extend through the tower 170).

If the power generated by the generator 130 exceeds the threshold, the power generated by the rotor hub generator 136 is used to power the braking system. The braking system may be powered to apply a braking force to the rotor 102 to reduce the rotational speed of the rotor 102, as described above. The power monitor may continuously monitor the power generated by the generator 130 and redirect the power generated by the rotor hub generator to either the distributor in the base housing 180 (if the threshold is not exceeded) or the braking system (if the threshold is exceeded).

In arrangements in which the wind turbine 100 comprises solar cells/solar panels, additionally electrical power may be generated when light falls thereon. The generated electrical power may be distributed by the distributor in the base housing 180.

As will be appreciated, the wind turbines disclosed herein are of increased efficiency and quieter operation, and are suitable for domestic use. The skilled person will be able to envisage other wind turbines and features thereof without departing from the scope of the appended claims. In particular, it is noted that one or more features included in one or more drawings may be integrated into wind turbines shown in other drawings, as will be appreciated by the skilled person.

## Claims

1. A wind turbine (100) comprising:
a rotor (102) comprising a hub (106) and at least one blade (108a-h) extending from the hub (106), the rotor (102) configured to rotate as wind engages the at least one blade (108a-h);
a rotor hub support (111), the rotor being coupled to the rotor hub support and configured to rotate relative to the rotor hub support;
a tower (170) coupled to the hub via the rotor hub support and configured to support the rotor, wherein a longitudinal axis of the tower is perpendicular to a longitudinal axis of the hub;
a frame (104) configured to at least partially receive the rotor (102) therein; and
a first generator (130, 136) configured to generate electrical power from rotation of the rotor, the first generator comprising at least one magnet and a conductor coil,
wherein one of the at least one magnet and conductor coil is coupled to the rotor (102) and configured to rotate therewith, and the other of the at least one magnet and the conductor coil is fixed relative to the frame (104), such that rotation of the rotor causes relative movement between the conductor coil and the at least one magnet; and
a second generator (530b) configured to generate electrical power on rotation of the rotor (102) relative to the rotor hub support, the second generator comprising at least one magnet and a conductor coil, wherein one of the at least one magnet and conductor coil of the second generator is coupled to the rotor (102) and configured to rotate therewith, and the other of the at least one magnet and the conductor coil of the second generator is fixed to the rotor hub support, such that rotation of the rotor causes relative movement between the conductor coil and the at least one magnet of the second generator.

2. A wind turbine according to claim 1, wherein frame comprises an aperture (116) and wherein the rotor is received within the aperture.

3. A wind turbine according to claim 1 or 2, wherein the rotor further comprises a ring (110), and wherein an outer end of the at least one blade is coupled to the ring such that the at least one blade extends between the hub and the ring, wherein the rotor comprises a plurality of blades extending from the hub, and wherein an outer end of each of the plurality blades is coupled to the ring, such that each of the plurality of blades extends between the hub and then ring.

4. A wind turbine according to claim 3, wherein the one of the at least one magnet and conductor coil is coupled to the ring (110) and is configured to rotate therewith, and wherein the frame comprises a circular aperture and wherein the rotor is received therein.

5. A wind turbine according to claim 1, further comprising:
a rotatable element (194) configured to rotate with respect to the tower, and a rotation translation mechanism configured to translate the rotation of the rotor into rotation of the rotatable element about an axis perpendicular to an axis of rotation of the rotor, wherein the rotation translation mechanism comprises a rotatable shaft (196) which is at least partially received within the tower, and wherein rotation of the rotatable shaft causes rotation of the rotatable element, and, comprising a further generator comprising at least one magnet and a conductor coil, wherein one of the at least one magnet and the conductor coil of the further generator is coupled to the rotatable element, and wherein the other of the at least one magnet and the conductor coil of the further generator is rotatably fixed relative to the rotatable element.

6. A wind turbine according to any preceding claim, further comprising a housing (140), wherein the rotor, the frame and the first generator are received within the housing.

7. A wind turbine according to claim 6, wherein at least a portion of the tower is received within the housing.

8. A wind turbine according to any preceding claim, further comprising a base housing, wherein the base housing is configured to receive at least a portion of the tower.

9. A wind turbine according to claim 1, wherein the tower is rotatable with respect to the base housing.

10. A wind turbine according to any preceding claim, comprising a further rotor comprising a hub and at least one blade extending from the hub, the rotor configured to rotate as wind engages the at least one blade, wherein the further rotor is configured to rotate in an opposed direction to a direction of rotation of the rotor.

11. A wind turbine according to any preceding claim, further comprising a brake configured to apply a braking force to the rotor to resist rotation of the rotor and in dependence on a rate of rotation of the rotor.

12. A wind turbine according to claim 11, wherein the brake comprises an electrical brake, and wherein power generated by the second generator is used to power the electrical brake.

13. A funnelling system configured to direct air flow and comprising:
a wind turbine (100) according to any of claims 1 to 12;
a collection tray; the collection tray being coupled to the wind turbine such that the wind turbine directs air into the collection tray; and
wherein the collection tray comprises at least one outlet configured to direct the air collected by the collection tray.

## Patentansprüche

1. Windkraftanlage (100), umfassend:
einen Rotor (102), umfassend eine Nabe (106) und mindestens ein Blatt (108a-h), das sich von der Nabe (106) erstreckt, wobei der Rotor (102) konfiguriert ist, um zu rotieren, wenn Wind mit dem mindestens einen Blatt (108a-h) interagiert;
eine Rotornabenhalterung (111), wobei der Rotor mit der Rotornabenhalterung gekoppelt und konfiguriert ist, um relativ zu der Rotornabenhalterung zu rotieren;
einen Turm (170), der über die Rotornabenhalterung mit der Nabe gekoppelt und konfiguriert ist, um den Rotor zu halten, wobei eine Längsachse des Turms senkrecht zu einer Längsachse der Nabe vorliegt;
einen Rahmen (104), der konfiguriert ist, um den Rotor (102) mindestens teilweise darin aufzunehmen; und
einen ersten Generator (130, 136), der konfiguriert ist, um aus der Rotation des Rotors elektrische Energie zu generieren, wobei der erste Generator mindestens einen Magneten und eine Leiterspule umfasst,
wobei einer des mindestens einen Magneten und die Leiterspule mit dem Rotor (102) gekoppelt und konfiguriert ist, um damit zu rotieren, und der andere des mindestens einen Magneten und die Leiterspule relativ zu dem Rahmen (104) derart befestigt ist, dass Rotation des Rotors relative Bewegung zwischen der Leiterspule und dem mindestens einen Magneten bewirkt; und
einen zweiten Generator (530b), der konfiguriert ist, um bei Rotation des Rotors (102) relativ zu der Rotornabenhalterung elektrische Energie zu generieren, wobei der zweite Generator mindestens einen Magneten und eine Leiterspule umfasst, wobei einer des mindestens einen Magneten und die Leiterspule des zweiten Generators mit dem Rotor (102) gekoppelt und konfiguriert ist, um damit zu rotieren, und der andere des mindestens einen Magneten und die Leiterspule des zweiten Generators derart an der Rotornabenhalterung befestigt ist, dass Rotation des Rotors relative Bewegung zwischen der Leiterspule und dem mindestens einen Magneten des zweiten Generators bewirkt.

2. Windkraftanlage nach Anspruch 1, wobei der Rahmen eine Öffnung (116) umfasst und wobei der Rotor innerhalb der Öffnung aufgenommen ist.

3. Windkraftanlage nach Anspruch 1 oder 2, wobei der Rotor weiter einen Ring (110) umfasst und wobei ein äußeres Ende des mindestens einen Blatts mit dem Ring derart gekoppelt ist, dass sich das mindestens eine Blatt zwischen der Nabe und dem Ring erstreckt, wobei der Rotor eine Vielzahl von Blättern umfasst, die sich von der Nabe erstrecken, und wobei ein äußeres Ende jedes der Vielzahl von Blättern mit dem Ring derart gekoppelt ist, dass sich jedes der Vielzahl von Blättern zwischen der Nabe und dem Ring erstreckt.

4. Windkraftanlage nach Anspruch 3, wobei der eine des mindestens einen Magneten und die Leiterspule mit dem Ring (110) gekoppelt und konfiguriert ist, um damit zu rotieren, und wobei der Rahmen eine kreisförmige Öffnung umfasst und wobei der Rotor darin aufgenommen ist.

5. Windkraftanlage nach Anspruch 1, weiter umfassend:
ein rotierbares Element (194), das konfiguriert ist, um bezüglich des Turms zu rotieren, und
einen Rotations-Translations-Mechanismus, der konfiguriert ist, um die Rotation des Rotors in Rotation des rotierbaren Elements um eine Achse senkrecht zu einer Rotationsachse des Rotors herum zu übersetzen, wobei der Rotations-Translations-Mechanismus eine rotierbare Welle (196) umfasst, die mindestens teilweise innerhalb des Turms aufgenommen ist, und wobei Rotation der rotierbaren Welle Rotation des rotierbaren Elements bewirkt, und umfassend einen weiteren Generator, der mindestens einen Magneten und eine Leiterspule umfasst, wobei einer des mindestens einen Magneten und die Leiterspule des weiteren Generators mit dem rotierbaren Element gekoppelt ist und der andere des mindestens einen Magneten und die Leiterspule des weiteren Generators relativ zu dem rotierbaren Element rotierbar befestigt ist.

6. Windkraftanlage nach einem vorstehenden Anspruch, weiter umfassend ein Gehäuse (140), wobei der Rotor, der Rahmen und der erste Generator innerhalb des Gehäuses aufgenommen sind.

7. Windkraftanlage nach Anspruch 6, wobei mindestens ein Abschnitt des Turms innerhalb des Gehäuses aufgenommen ist.

8. Windkraftanlage nach einem vorstehenden Anspruch, weiter umfassend ein Sockelgehäuse, wobei das Sockelgehäuse konfiguriert ist, um mindestens einen Abschnitt des Turms aufzunehmen.

9. Windkraftanlage nach Anspruch 1, wobei der Turm bezüglich des Sockelgehäuses rotierbar ist.

10. Windkraftanlage nach einem vorstehenden Anspruch, umfassend einen weiteren Rotor, der eine Nabe und mindestens ein sich von der Nabe erstreckendes Blatt umfasst, wobei der Rotor konfiguriert ist, um zu rotieren, wenn Wind mit dem mindestens einen Blatt interagiert, wobei der weitere Rotor konfiguriert ist, um in einer der Rotationsrichtung des Rotors entgegengesetzten Richtung zu rotieren.

11. Windkraftanlage nach einem vorstehenden Anspruch, weiter umfassend eine Bremse, die konfiguriert ist, um eine Bremskraft auf den Rotor, um Rotation des Rotors zu widerstehen, und in Abhängigkeit von der Rotationsgeschwindigkeit des Rotors anzulegen.

12. Windkraftanlage nach Anspruch 11, wobei die Bremse eine elektrische Bremse umfasst und wobei die von dem zweiten Generator generierte Energie zur Versorgung der elektrischen Bremse verwendet wird.

13. Leitsystem, das konfiguriert ist, um Luftströmung zu führen, und Folgendes umfasst:
eine Windkraftanlage (100) nach einem der Ansprüche 1 bis 12;
eine Auffangwanne; wobei die Auffangwanne mit der Windkraftanlage derart gekoppelt ist, dass die Windkraftanlage Luft direkt in die Auffangwanne führt; und
wobei die Auffangwanne mindestens einen Auslass umfasst, der konfiguriert ist, um die von der Auffangwanne aufgefangene Luft zu führen.

## Revendications

1. Éolienne (100) comprenant :
un rotor (102) comprenant un moyeu (106) et au moins une pale (108a-h) s'étendant à partir du moyeu (106), le rotor (102) étant configuré pour tourner lorsque le vent s'engage dans au moins une pale (108a-h) ;
un support de moyeu de rotor (111), le rotor étant couplé au support de moyeu de rotor et configuré pour tourner par rapport au support de moyeu de rotor ;
une tour (170) couplée au moyeu via le support du moyeu du rotor et configurée pour supporter le rotor, dans laquelle un axe longitudinal de la tour est perpendiculaire à un axe longitudinal du moyeu ;
un châssis (104) configuré pour recevoir au moins partiellement le rotor (102) ; et
un premier générateur (130, 136) configuré pour générer de l'énergie électrique à partir de la rotation du rotor, le premier générateur comprenant au moins un aimant et une bobine conductrice,
dans laquelle l'un des au moins un aimant et la bobine conductrice est couplé(e) au rotor (102) et configuré(e) pour tourner avec celui-ci, et l'autre des au moins un aimant et la bobine conductrice est fixé(e) par rapport au châssis (104), de sorte que la rotation du rotor provoque un mouvement relatif entre la bobine conductrice et l'au moins un aimant ;
un deuxième générateur (530b) configuré pour générer de l'énergie électrique par rotation du rotor (102) par rapport au support du moyeu du rotor, le deuxième générateur comprenant au moins un aimant et une bobine conductrice, dans laquelle un des au moins un aimant et la bobine conductrice du deuxième générateur est couplé(e) au rotor (102) et configuré(e) pour tourner avec celui-ci, et l'autre des au moins un aimant et la bobine conductrice du deuxième générateur est fixé(e) au support du moyeu du rotor, de sorte que la rotation du rotor provoque un mouvement relatif entre la bobine conductrice et l'au moins un aimant du deuxième générateur.

2. Éolienne selon la revendication 1, dans laquelle le châssis comprend une ouverture (116) et dans laquelle le rotor est reçu à l'intérieur de l'ouverture.

3. Éolienne selon la revendication 1 ou 2, dans laquelle le rotor comprend en outre un anneau (110), et dans laquelle une extrémité extérieure de l'au moins une pale est couplée à l'anneau de sorte que l'au moins une pale s'étend entre le moyeu et l'anneau, dans laquelle le rotor comprend une pluralité de pales s'étendant à partir du moyeu, et dans laquelle une extrémité extérieure de chacune de la pluralité de pales est couplée à l'anneau, de sorte que chacune des multiples pales s'étend entre le moyeu et l'anneau.

4. Éolienne selon la revendication 3, dans laquelle l'un des au moins un aimant et la bobine conductrice est couplé(e) à l'anneau (110) et est configuré(e) pour tourner avec celui-ci, et dans laquelle le châssis comprend une ouverture circulaire et dans laquelle le rotor est reçu.

5. Éolienne selon la revendication 1, comprenant en outre :
un élément rotatif (194) configuré pour tourner par rapport à la tour, et
un mécanisme de translation de rotation configuré pour traduire la rotation du rotor en rotation de l'élément rotatif autour d'un axe perpendiculaire à un axe de rotation du rotor, dans laquelle le mécanisme de translation de rotation comprend un arbre rotatif (196) qui est au moins partiellement reçu à l'intérieur de la tour, et dans laquelle la rotation de l'arbre rotatif provoque la rotation de l'élément rotatif, et, comprenant un générateur supplémentaire comprenant au moins un aimant et une bobine conductrice, dans laquelle l'un de l'au moins un aimant et de la bobine conductrice du générateur supplémentaire est couplé(e) à l'élément rotatif, et dans laquelle l'autre de l'au moins un aimant et la bobine conductrice du générateur supplémentaire est fixé(e) de manière rotative par rapport à l'élément rotatif.

6. Éolienne selon une quelconque revendication précédente, comprenant en outre un boîtier (140), dans laquelle le rotor, le châssis et le premier générateur sont reçus à l'intérieur du boîtier.

7. Éolienne selon la revendication 6, dans laquelle au moins une partie de la tour est reçue à l'intérieur du boîtier.

8. Éolienne selon une quelconque revendication précédente, comprenant en outre un boîtier de base, dans laquelle le boîtier de base est configuré pour recevoir au moins une partie de la tour.

9. Éolienne selon la revendication 1, dans laquelle la tour tourne par rapport au boîtier de base.

10. Éolienne selon une quelconque revendication précédente, comprenant un rotor supplémentaire comprenant un moyeu et au moins une pale s'étendant à partir du moyeu, le rotor étant configuré pour tourner lorsque le vent entre en contact avec l'au moins une pale, dans laquelle le rotor supplémentaire est configuré pour tourner dans une direction opposée au sens de rotation du rotor.

11. Éolienne selon une quelconque revendication précédente, comprenant en outre un frein configuré pour appliquer une force de freinage au rotor afin de résister à la rotation du rotor et en fonction de la vitesse de rotation du rotor.

12. Éolienne selon la revendication 11, dans laquelle le frein comprend un frein électrique, et dans laquelle la puissance générée par le deuxième générateur est utilisée pour alimenter le frein électrique.

13. Système de canalisation configuré pour diriger le flux d'air et comprenant :
une éolienne (100) selon l'une quelconque des revendications 1 à 12 ;
un bac de récupération ; le bac de récupération étant relié à l'éolienne de telle sorte que l'éolienne dirige l'air vers le bac de récupération ; et
dans lequel le bac de récupération comprend au moins une sortie configurée pour diriger l'air collecté par le bac de récupération.
